# EUROPEAN PATENT APPLICATION

(11) **EP 3 418 337 A1**
(43) Date of publication of application: **26.12.2018**
(21) Application number: 16890664.2
(22) Date of filing: 12.12.2016
(51) Int. Cl.: C09D 183/06, C09D 7/12, C07F 7/18

(54) **COATING COMPOSITION AND COATED ARTICLE**

(30) Priority: 19.02.2016 JP 2016029478; 01.04.2016 JP 2016074020
(71) Applicant: Shin-Etsu Chemical Co., Ltd., Tokyo 100-0004 (JP)
(72) Inventor: FUKUSHIMA, Motoo, Annaka-shi Gunma 379-0224 (JP); YOSHIKAWA, Yuji, Annaka-shi Gunma 379-0224 (JP)
(74) Representative: Stoner, Gerard Patrick
(86) International application number: PCT/JP2016/086870
(87) International publication number: WO 2017/141527

(57) **Abstract**

Provided is a coating composition that contains (A) an alkoxysilane containing a compound represented by formula (I) or a hydrolyzate or condensate thereof and (B) a curing catalyst, the coating composition giving a coating having selective ultraviolet radiation transmission optical-characteristics, namely transmitting ultraviolet radiation having wavelengths of 280 nm or more to the greatest extent possible while completely blocking ultraviolet radiation having wavelengths of less than 280 nm, without losing the advantages of a curable coating composition having a siloxane bond. 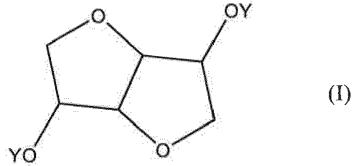 (In the formula, the Y moieties may be the same as, or different from, each other, and each denote a group represented by -R¹-SiR²ₙ(OR³)₃₋ₙ, R¹ denotes an alkylene group having 1-6 carbon atoms, and R² and R³ may be the same as, or different from, each other, and each denote an alkyl group having 1-5 carbon atoms, n is an integer between 0 and 2.)

## Description

### TECHNICAL FIELD

This invention relates to a coating composition and coated article. More particularly, it relates to a coating composition in the form of a silicone composition comprising an alkoxysilane compound having a bicyclic ether structure and an article coated with the composition.

### BACKGROUND ART

On account of different properties from visible light, ultraviolet (UV) radiation is used in a variety of fields including analyzers such as UV photography analyzers, banknote authenticity inspecting instruments, and photo-chemical reaction units.

UV radiation is generally divided into near ultraviolet (wavelength 380-200 nm, NUV), far or vacuum ultraviolet (wavelength 200-10 nm, FUV/VUV), and extreme ultraviolet (wavelength 1-31 nm, EUV/XUV). Since oxygen-containing air absorbs UV with wavelengths of 200 nm or shorter and lens materials have a low transmittance relative to wavelengths of 180 nm or shorter, a typical choice on utilization of UV is NUV.

In terms of wavelength, NUV is divided into UV-A (400-315 nm), UV-B (315-280 nm), and UV-C (280-200 nm), or health UV (400-360 nm), chemical UV (360-280 nm), and germicidal UV (280-200 nm).

Among others, UV in the wavelength region of UV-C or germicidal UV is highly toxic in that it generates ozone from airborne oxygen, which reacts with DNA in creatures to injure genes.

On utilization of UV in applications other than sterilization, it is desired to transmit UV having wavelengths of 280 nm or longer, but to block UV having wavelengths of shorter than 280 nm as much as possible.

For utilization of UV by such a choice of wavelength, Patent Document 1 reports that the surface of a member is treated by chemical reaction while a liquid compound capable of absorbing UV of a certain wavelength is interposed between a light source and the member. This technique has the problem that the apparatus becomes of large complex shape.

It is also known from Patent Document 2 that UV is blocked by a laminate of UV-absorbing plastic layers. This technique has the problem that the plastic material is colored by UV and the quantity of UV lowers with the lapse of time.

Also, since soda lime glass commonly used as glazing absorbs UV even in a wavelength range of 350 nm or shorter, a sufficient intensity of UV is not available. On the other hand, since heavy metal-doped quartz glass has a high content of heavy metal capable of absorbing UV wavelength, the illuminance of UV substantially lowers during service. There is the problem that the effect of UV decreases to half even when a lamp is ignited.

It is also known from Patent Document 3 that the surface of quartz glass by which the entire spectrum of NUV is transmitted is coated by vacuum evaporation or sputtering so that UV is selectively transmitted. This technique is not readily implemented because an expensive coating system including a vacuum unit is necessary.

As the coating agent for use in coating of substrates of resins such as plastic plates or films and glass, thermosetting coating agents of siloxane structure are known. A number of techniques have been proposed with respect to the siloxane-based coating agent.

For example, Patent Documents 4 and 5 disclose coating compositions comprising a partial condensate of trihydroxysilane and colloidal silica. Patent Documents 6 and 7 disclose coating compositions comprising primarily a partial condensate of alkyltrialkoxysilane and tetraalkoxysilane.

Patent Documents 8 and 9 describe to promote curing of coating compositions by adding thereto a titanium chelate compound or a partial hydrolytic condensate thereof as a curing catalyst.

However, general methylsiloxane allows for complete transmission of UV down to a wavelength of less than 280 nm. There is left room for improvement in selective UV transmission before the methylsiloxane can be used as a coating composition.

As discussed above, among the curable coating compositions of siloxane structure proposed thus far, none have been implemented as the coating composition which transmits UV in a wavelength range of 280 nm or longer, but blocks UV in a wavelength range of shorter than 280 nm.

### PRIOR ART DOCUMENTS

### PATENT DOCUMENTS

Patent Document 1: JP 3527969
Patent Document 2: JP-A 2003-067806
Patent Document 3: JP-A 2013-505482
Patent Document 4: JP-A S51-2736
Patent Document 5: JP-A S55-94971
Patent Document 6: JP-A S48-26822
Patent Document 7: JP-A S51-33128
Patent Document 8: JP-A H11-286652
Patent Document 9: JP-A H10-324827

### SUMMARY OF INVENTION

### TECHNICAL PROBLEM

An object of the invention, which has been made under the above-mentioned circumstances, is to provide a siloxane-based coating composition having optical performance of selective UV transmission that UV in a wavelength range of 280 nm or longer is transmitted as much as possible, but UV in a wavelength range of shorter than 280 nm is blocked, without losing the advantages of siloxane bond-bearing curable coating compositions.

### SOLUTION TO PROBLEM

Making extensive investigations to attain the above object, the inventors have found that from a coating composition comprising an alkoxysilane containing an alkoxysilane compound having a bicyclic ether structure such as isosorbide structure, a cured coating capable of transmitting UV in a wavelength region of 280 nm or longer, but blocking UV in a wavelength region of shorter than 280 nm is effectively formed. The invention is predicated on this finding.

The invention provides the following.
1. A coating composition comprising (A) an alkoxysilane containing a compound having the formula (I), or a hydrolyzate or condensate thereof and (B) a curing catalyst. 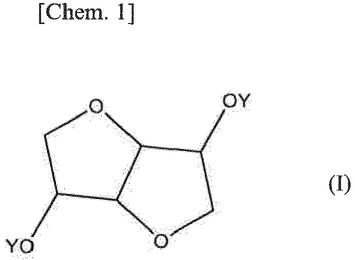 Herein Y which may be the same or different is each independently a group: -R¹-SiR²ₙ(OR³)₃₋ₙ wherein R¹ is an alkylene group of 1 to 6 carbon atoms, R² and R³ which may be the same or different are each independently an alkyl group of 1 to 5 carbon atoms, and n is an integer of 0 to 2.
2. The coating composition of 1 wherein the curing catalyst is a titanium alkoxide compound.
3. The coating composition of 1 or 2 wherein the compound having formula (I) is the hydrosilylation reaction product of isosorbide diallyl ether or isosorbide divinyl ether with a hydrosilane.
4. A coated article comprising a substrate and a cured coating formed thereon by curing the coating composition of any one of 1 to 3.
5. A compound having the formula (I): 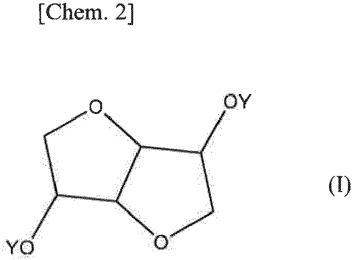 wherein Y which may be the same or different is each independently a group: -R¹-SiR²ₙ(OR³)₃₋ₙ wherein R¹ is an alkylene group of 1 to 6 carbon atoms, R² and R³ which may be the same or different are each independently an alkyl group of 1 to 5 carbon atoms, and n is an integer of 0 to 2.
6. The compound of 5 wherein R¹ is ethylene or trimethylene, and n is 0.

### ADVANTAGEOUS EFFECTS OF INVENTION

From the coating composition of the invention, there may be formed a cured coating having the optical performance of selective UV transmission that UV in a wavelength region of 280 nm or longer is transmitted, but UV in a wavelength region of shorter than 280 nm is blocked.

Also, from the coating composition, there may be formed a coating having hard physical properties of inorganic organosiloxane compounds and simultaneously possessing various properties of organic polymers including film formability, crack resistance, flexibility and glass adhesion.

The coating composition capable of providing a hard coating meeting the above properties or a coated article having the coating may be used in a variety of fields including analyzers such as UV photography analyzers, banknote authenticity inspecting instruments, and photo-chemical reaction units.

### BRIEF DESCRIPTION OF DRAWINGS

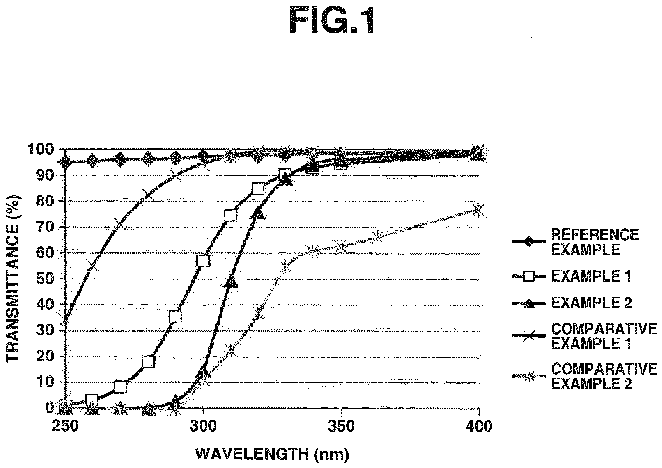

[FIG. 1] FIG. 1 is a diagram of ultraviolet/visible light transmission spectra of coatings prepared in Examples and Comparative Examples.

### DESCRIPTION OF EMBODIMENTS

Now the invention is described in detail.

The invention provides a coating composition comprising (A) an alkoxysilane containing a compound of bicyclic ether structure having the formula (I), or a hydrolyzate or condensate thereof and (B) a curing catalyst.

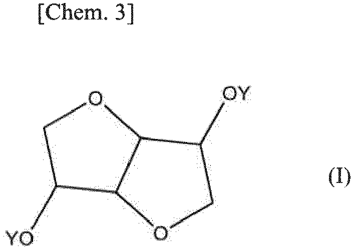

In formula (I), Y which may be the same or different is each independently a group: -R¹-SiR²ₙ(OR³)₃₋ₙ wherein R¹ is an alkylene group of 1 to 6 carbon atoms, R² and R³ which may be the same or different are each independently an alkyl group of 1 to 5 carbon atoms.

Examples of the C₁-C₆ alkylene group include, but are not limited to, methylene, ethylene, propylene, trimethylene, tetramethylene, pentamethylene, and hexamethylene. Inter alia, C₁-C₃ alkylene groups are preferred, with ethylene and trimethylene being more preferred.

Examples of the C₁-C₅ alkyl group which may be straight, branched or cyclic include methyl, ethyl, n-propyl, i-propyl, n-butyl, s-butyl, t-butyl, n-pentyl, cyclopropyl, cyclobutyl, and cyclopentyl. Inter alia, C₁-C₃ alkyl groups are preferred, methyl and ethyl are more preferred, and methyl is most preferred.

The subscript n is an integer of 0 to 2, preferably 0 or 1, more preferably 0.

The compound having formula (I) may be obtained by reacting a compound having a bicyclic ether structure and two OH groups with a compound having a C-C double bond to synthesize a bicyclic ether compound having a C-C double bond, and effecting hydrosilylation reaction of the bicyclic ether compound with an alkoxysilane having a Si-H group in the presence of a catalyst.

The compound having a bicyclic ether structure and two OH groups may be any of stereoisomers of D-isosorbide (simply abbreviated as isosorbide, hereinafter), L-isosorbide or isomannide, or a combination of two or more thereof.

The dihydric alcohol is preferably one originating from isosorbide in view of availability. Isosorbide is 1,4:3,6-dianhydro-D-sorbitol which is prepared from a bio-reactant, for example, obtained by hydrogenation of D-glucose and subsequent dehydration with an acid catalyst. It may be synthesized by any well-known methods, for example, by subjecting sorbitol to dehydration reaction under the action of various dehydration catalysts, especially strong acid catalysts.

Examples of the dehydration catalyst include sulfuric acid, p-toluenesulfonic acid, methanesulfonic acid, hydrochloric acid, and phosphoric acid. In general, the dehydration reaction may be effectively carried out in an organic solvent such as toluene or xylene.

Examples of the compound having a C-C double bond include allyl compounds and vinyl compounds. This compound is reacted with OH groups on the compound having a bicyclic ether structure and two OH groups to synthesize a bicyclic ether compound having a bond containing a C-C double bond, that is, an isosorbide-diallyl ether compound or isosorbide-divinyl ether compound, after which hydrosilylation reaction of the ether compound with an alkoxysilane having a hydro group is carried out in the presence of a hydrosilylation catalyst, yielding the desired compound having formula (I).

More particularly, the compound having formula (I), which is a bissilane compound, may be prepared by addition reaction of an isosorbide-unsaturated ether compound with a hydrosilane compound having the formula (III).

H-SiR²ₙ(OR³)₃₋ₙ (III)

Herein R², R³ and n are as defined above.

The hydrosilane compounds having formula (III) are preferably hydrosilane compounds having per molecule one to three groups, desirably two or three groups selected from methoxy, ethoxy, propoxy, butoxy and pentoxy, more preferably trimethoxysilane and triethoxysilane.

The addition reaction of an isosorbide-unsaturated ether compound with a hydrosilane compound having formula (III) may be carried out under well-known conditions for hydrosilylation reaction, preferably in the presence of a platinum catalyst at a temperature in the range from room temperature to 150°C, more preferably 25 to 100°C. On use of trimethoxysilane, the reaction is completed within about 30 minutes to about 2 hours by heating at about 80°C.

In addition to the compound having formula (I), component (A) in the inventive composition may further contain a silane compound having the formula (II), and a co-hydrolyzate or condensate of these silane compounds.

A¹ₐA²_{b}Si(A³)_{4-a-b} (II)

Herein A¹ which may be the same or different is each independently a C₁-C₁₀ alkyl group; A² which may be the same or different is each independently one or more groups selected from among aryl, halo-alkyl, halo-aryl, alkenyl, epoxy, epoxyalkyl, (meth)acryloyl, (meth)acryloyloxyalkyl, vinyl, mercapto, mercaptoalkyl, amino and aminoalkyl groups; A³ which may be the same or different is each independently a C₁-C₁₀ alkoxy, C₂-C₁₀ alkenyloxy or C₁-C₁₀ acyloxy group, a and b each are an integer of 0 to 2, a+b is an integer of 0 to 2.

Examples of the C₁-C₁₀ alkyl group which may be straight, branched or cyclic include n-hexyl, n-heptyl, n-octyl, n-nonyl, n-decyl and cyclohexyl as well as those exemplified above for the C₁-C₅ alkyl group.

The alkenyl group preferably has 2 to 10 carbon atoms although the carbon count is not particularly limited. Examples include ethenyl, n-1-propenyl, n-2-propenyl, n-1-butenyl, n-2-butenyl, n-3-butenyl, n-1-pentenyl, and n-1-decenyl.

Examples of the haloalkyl group include the aforementioned examples of the C₁-C₁₀ alkyl group in which at least one hydrogen atom is substituted by fluorine, chlorine, bromine or iodine atom.

The aryl group preferably has 6 to 20 carbon atoms although the carbon count is not particularly limited. Examples include phenyl, 1-naphthyl, 2-naphthyl, 1-anthryl, 2-anthryl, 9-anthryl, 1-phenanthryl, 2-phenanthryl, 3-phenanthryl, 4-phenanthryl and 9-phenanthryl.

Examples of the haloaryl group include the aforementioned examples of the aryl group in which at least one hydrogen atom is substituted by fluorine, chlorine, bromine or iodine atom.

Examples of the epoxyalkyl group include 3-glycidoxypropyl and 2-(3,4-epoxycyclohexyl)ethyl.

Exemplary of the (meth)acryloyloxyalkyl group is 3-(meth)acryloyloxypropyl.

Exemplary of the mercaptoalkyl group is 3-mercaptopropyl.

Examples of the aminoalkyl group include 3-aminopropyl and 2-aminoethyl.

Examples of the C₁-C₁₀ alkoxy group include methoxy, ethoxy, n-propoxy, i-propoxy, n-butoxy, i-butoxy, s-butoxy, t-butoxy, n-pentoxy, n-hexoxy, n-heptyloxy, n-octyloxy, n-nonyloxy, and n-decyloxy.

Examples of the C₂-C₁₀ alkenyloxy group include ethenyloxy, n-1-propenyloxy, n-2-propenyloxy, n-1-butenyloxy, n-2-butenyloxy, n-3-butenyloxy, n-1-pentenyloxy, and n-1-decenyloxy.

Examples of the C₁-C₁₀ acyloxy group include formyloxy, acetoxy, propionyloxy, butyryloxy, isobutyryloxy, pivaloyloxy, and benzoyloxy.

Examples of the alkoxysilane having formula (II) include tetramethoxysilane, tetraethoxysilane, tetra-n-propoxysilane, tetraisopropoxysilane, tetra-n-butoxysilane, tetraisobutoxysilane, methyltrimethoxysilane, methyltriethoxysilane, ethyltrimethoxysilane, isobutyltrimethoxysilane, vinyltrimethoxysilane, vinyltriethoxysilane, γ-methacryloxypropyltrimethoxysilane, γ-acryloxypropyltrimethoxysilane, β-(3,4-epoxycyclohexyl)ethyltrimethoxysilane, γ-glycidoxypropyltrimethoxysilane, γ-aminopropyltrimethoxysilane, N-β-(aminoethyl)-γ-aminopropyltriethoxysilane, dimethyldimethoxysilane, vinylmethyldimethoxysilane, γ-methacryloxypropylmethyldimethoxysilane, γ-acryloxypropylmethyldimethoxysilane, γ-glycidoxypropylmethyldimethoxysilane, γ-aminopropylmethyldimethoxysilane, phenyltriethoxysilane, and phenyltrimethoxysilane.

These silanes may be used alone or in combination of two or more while a previously partially hydrolyzed product thereof is also acceptable.

The compound having formula (I) used as component (A) in the inventive coating composition is effective for improving the hydrophilicity, lowering the contact angle with water, and increasing the refractive index of the resulting cured coating, and exerting the effect of absorbing light with a specific wavelength by reacting with the curing catalyst. When it is taken into account that the resulting cured coating exerts these effects to a full extent, the compound having formula (I) is preferably fed to the reaction system in such a proportion in component (A) that a content of Si atoms available from the compound having formula (I) is at least 55 mol% based on the total number of Si atoms in component (A).

Also, when the hydrolyzate or condensate is used as component (A), it is preferred from the standpoints of stabilizing the resulting system and overcoming various problems (e.g., whitening, bubbles, non-uniformity) during coating formation that water be added in an amount of 1 to 10 moles, more preferably 1.5 to 5 moles per mole of total hydrolyzable groups represented by OR³ and A³ in formulae (I) and (II).

Notably, a catalyst may be used during the hydrolysis. The hydrolytic catalyst used herein may be any well-known catalyst, and examples thereof include acidic hydrogen halides, carboxylic acids, sulfonic acids, acidic or weakly acidic oxides and inorganic salts, and solid acids such as ion exchange resins. The hydrolytic catalyst is used in an amount of 0.001 to 10 mol% based on the moles of hydrolyzable groups (OR³ and A³). The hydrolytic reaction is preferably carried out under acidic conditions at pH 1 to 6, and more preferably under weakly acidic conditions at pH 4 to 6 as viewed from the standpoint of stability of resulting silanol groups.

The hydrolysis and condensation may be carried out under well-known conditions, and optionally in a solvent.

Examples of the solvent include alcohols such as methanol, ethanol, propanol, isopropyl alcohol, n-butanol, isobutanol, t-butanol, and diacetone alcohol; ketones such as methyl propyl ketone, diethyl ketone, methyl isobutyl ketone, cyclohexanone and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as propyl acetate, butyl acetate and cyclohexyl acetate.

The reaction temperature and time may be selected as appropriate depending on the azeotropic temperature of the system or the like. The temperature and time are typically about 20 to 150°C and about 30 minutes to 2 hours, though not critical.

To the inventive coating composition, (B) a curing catalyst is added for the purpose of promoting cure. As the curing catalyst, any appropriate one selected from well-known catalysts may be used. Inter alia, titanium base catalysts are preferred in the practice of the invention. Those catalysts which are dissolvable or dispersible in component (A) and optional solvent are preferred.

Examples include titanium alkoxides, titanium halides, and alkyl titanium, with the titanium alkoxides being preferred.

Exemplary titanium alkoxides include titanium tetraisopropoxide, titanium tetra-n-propoxide, titanium tetraisobutoxide, titanium tetra-n-butoxide, and titanium tetraphenoxide, with titanium tetra-n-butoxide being preferred.

The amount of component (B) blended is not particularly limited as long as the amount is effective for curing the composition. When it is considered to produce a cured coating having a satisfactory hardness, to prevent the cured coating from cracking or whitening, and to provide the composition with an adequate pot-life, the amount of component (B) is preferably 0.001 to 10% by weight, more preferably 0.01 to 5% by weight based on component (A).

The inventive coating composition may further contain (C) a solvent for purposes of adjusting the concentration of active ingredient and so forth.

As the solvent, polar organic solvents are preferably used. Examples include alcohols such as methanol, ethanol, propanol, isopropyl alcohol, n-butanol, isobutanol, t-butanol, and diacetone alcohol; ketones such as methyl propyl ketone, diethyl ketone, methyl isobutyl ketone, cyclohexanone and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as propyl acetate, butyl acetate and cyclohexyl acetate.

While the formulation of the inventive coating composition is suitably designed in consideration of such factors as the stability of the composition, and the transparency, hardness, adhesion and crack resistance of a cured coating, the coating composition preferably contains component (A) in an amount of 50 to 99% by weight, more preferably 60 to 95% by weight based on the total weight of the composition.

The inventive coating composition described above may be coated onto at least one surface of a substrate directly or via at least one layer of different material and cured to form a coating. In this way, a coated article is obtained.

The substrates include molded resins, ceramics, and glass, but are not limited thereto. Especially, transparent materials are preferred. Inter alia, glass materials are preferred, with quartz glass capable of UV transmission being more preferred.

A suitable coating technique may be selected from well-known coating techniques, for example, brush coating, spraying, dipping, flow coating, roll coating, curtain coating, spin coating, and knife coating, depending on the shape of the substrate and the desired thickness and properties of the coating.

The coating formed by the above coating technique comes in contact with moisture in the ambient atmosphere whereby hydrolytic condensation reaction of component (A) takes place within the coating. An index of moisture in the atmosphere may be an arbitrary humidity in the range of 10 to 100% RH. In general, the higher the humidity, the faster the hydrolysis takes place. Thus moisture may be added to the atmosphere if desired.

The curing reaction temperature and time may be varied depending on such factors as the substrate used, moisture concentration, catalyst concentration, and the type of hydrolyzable group. Typically, the time is about 5 minutes to about 5 hours at a temperature not higher than the heat resistant temperature of the substrate used. Preferably the coating is cured by heating at a temperature not higher than the heat resistant temperature of the substrate for 10 minutes to 2 hours, more preferably at 30 to 150°C for 30 minutes to 2 hours.

Although the thickness of the cured coating is not particularly limited, it is preferably in the range of 0.5 to 60 µm, more preferably 1 to 30 µm in view of hardness, endowment of the substrate with optical properties, long-term stable adhesion, and avoidance of bubble and crack generation.

Notably, the desired thickness may be reached by iterating the series of coating and curing steps in an over-coating manner.

### EXAMPLES

Examples and Comparative Examples are given below by way of illustration and not by way of limitation.

It is noted that the refractive index is measured at 25°C by refracometer RX-7000α (Atago Co., Ltd.); the viscosity is measured at 25°C by a rotational viscometer; the weight average molecular weight is measured versus polystyrene standards by gel permeation chromatography (GPC); and ¹H-NMR is analyzed by ADVANCE 400M (Bruker).

### [Synthesis Example 1] Synthesis of bis[(3-trimethoxysilyl)propoxy]isosorbide

A flask equipped with a nitrogen inlet tube, stirrer, condenser and thermometer was charged with 225 g (1 mol) of bis(allyloxy)isosorbide (Specific Polymers) and 250 g of toluene, which were stirred for dissolution. To the solution, 0.7 g of a platinum catalyst (CAT-PL50-T, Shin-Etsu Chemical Co., Ltd.) was added, and 245 g (2.0 mol) of trimethoxysilane was added dropwise at 25°C. Exothermic reaction started immediately. The addition was controlled such that the reaction temperature might not exceed 65°C during dropwise addition. At the end of dropwise addition, the reaction mixture was held at a system temperature of 65°C for 2 hours, and then cooled. To the reaction system, 5 g of silica gel (Wakogel C-100, Wako Pure Chemical Industries, Ltd.) was added. This was followed by adsorption filtration to remove the platinum catalyst and vacuum concentration to remove toluene, yielding 460 g (0.96 mol) of the target compound in colorless transparent form. It had a refractive index of 1.4568 at 589 nm. On ¹H-NMR spectroscopy analysis, the compound was identified to be bis[(3-trimethoxysilyl)propoxy]isosorbide.
¹H-NMR (CDCl₃) δ: 0.6 (4H, -CH₂-Si), 1.6-1.7 (4H, -CH₂-), 3.5 (18H, CH₃-O),
3.4-4.0 (4H, -CH₂-O:2H, =CH-O:4H, -CH₂-O),
4.6-4.7 (2H, =CH-O) ppm

### [Synthesis Example 2] Synthesis of bis[(2-trimethoxysilyl)ethoxy]isosorbide

A flask equipped with a nitrogen inlet tube, stirrer, condenser and thermometer was charged with 19.8 g (0.1 mol) of bis(vinyloxy)isosorbide and 25 g of toluene, which were stirred for dissolution. To the solution, 3.5 g of a platinum catalyst (CAT-PL50-T, Shin-Etsu Chemical Co., Ltd.) was added, and 25.6 g (0.21 mol) of trimethoxysilane was added dropwise at 70°C. The addition was controlled such that the reaction temperature might not exceed 75°C during dropwise addition. At the end of dropwise addition, the reaction mixture was held at a system temperature of 75°C for 5 hours, and then cooled. To the reaction system, 5 g of silica gel (Wakogel C-100, Wako Pure Chemical Industries, Ltd.) was added. This was followed by adsorption filtration to remove the platinum catalyst and vacuum concentration to remove toluene, yielding 40.0 g (0.096 mol) of the target compound in colorless transparent form. It had a refractive index of 1.4541 at 589 nm. On ¹H-NMR spectroscopy analysis, the compound was identified to be bis[(2-trimethoxysilyl)ethoxy]isosorbide.
¹H-NMR (CDCl₃) δ: 1.0-1.2 (4H, -CH₂-Si), 3.5 (18H, CH₃-O),
3.4-4.0 (4H, -CH₂-O:2H, =CH-O:4H, -CH₂-O),
4.6-4.7 (2H, =CH-O) ppm

### [Comparative Synthesis Example 1] Synthesis of alkoxymethylsiloxane

A flask equipped with a nitrogen inlet tube, stirrer, cooling condenser, thermometer and dropping funnel was charged with 141 g (0.625 mol, siloxane weight 83.7 g) of dimethyltetramethoxydisoloxane and 20 g of methanol. With stirring at an internal temperature of 20-30°C, 0.84 g (1% based on the siloxane weight) of carboxylic acid type cation exchange resin (Purolite C106, Organo Co., Ltd.) was added to the flask, after which 11.8 g (0.66 mol) of deionized water was added dropwise over 30 minutes so as to keep the temperature at or below 50°C. With the temperature raised at 67°C, the reaction solution was aged for 2 hours under methanol reflux.

Thereafter, 61.2 g (1.9 mol) of methanol was distilled off under atmospheric pressure, whereupon the reaction solution was aged at 70°C for 1 hour to promote hydrolysis and polycondensation reaction. Finally, the residual methanol and low boiling fraction were distilled off at 80°C and a vacuum of 20 mmHg, after which the product was filtered, yielding 100 g of alkoxymethylsiloxane in colorless transparent liquid form. This compound had a viscosity of 32 mPa·s at 25°C, a refractive index of 1.5107 at 589 nm, and a weight average molecular weight of 1,500.

### [Comparative Synthesis Example 2] Synthesis of bisphenol A-modified alkoxysilane

A flask equipped with a nitrogen inlet tube, stirrer, condenser, and thermometer was charged with 92.6 g (0.406 mol) of 2,2'-bis(4-hydroxyphenyl)propane (Tokyo Chemical Industry Co., Ltd.) and 500 g of methyl isobutyl ketone (abbreviated as MIBK), which were stirred for dissolution. Then 100 g (0.82 mol) of allyl bromide and 138 g (1 mol) of anhydrous potassium carbonate were added to the solution, which was stirred at 110°C for 5 hours.

The solution was filtered to remove the formed potassium bromide and then concentrated in vacuum to remove MIBK. Toluene was added to the concentrate, which was washed with water and concentrated in vacuum again, yielding 83.9 g (0.272 mol) of 2,2'-bis(4-allyloxyphenyl)propane.

The resulting 2,2'-bis(4-allyloxyphenyl)propane, 30.8 g (0.1 mol), was dissolved in 70 ml of toluene. To the solution, 0.15 g of platinum catalyst (CAT-PL50-T, Shin-Etsu Chemical Co., Ltd.) was added. With stirring at 60°C, 26 g (0.21 mol) of trimethoxysilane was added dropwise. The reaction mixture was held at a temperature of 65°C for 2 hours and then cooled. To the reaction system, 5 g of silica gel (Wakogel C-100, Wako Pure Chemical Industries, Ltd.) was added. This was followed by adsorption filtration to remove the platinum catalyst and vacuum concentration to remove toluene, yielding 53 g (0.096 mol) of the target compound in colorless transparent form (viscosity 198 mPa·s, refractive index 1.5107 at 589 nm). On ¹H-NMR spectroscopy analysis, the compound was found to coincide with the structure of well-known 2,2'-bis[4-[3-(trimethoxysilyl)propoxy]phenyl]propane.

### [Example 1]

A 2-L flask equipped with a nitrogen inlet tube, stirrer, condenser, and thermometer was charged with 95 g of bis[(3-trimethoxysilyl)propoxy]isosorbide obtained in Synthesis Example 1, which was kept at 20°C with stirring. To the isosorbide, 5 g of tetra-n-butoxytitanium was added as curing catalyst, yielding a coating composition.

### [Example 2]

A coating composition was prepared as in Example 1 except that bis[(2-trimethoxysilyl)ethoxy]isosorbide in Synthesis Example 2 was used instead of bis[(3-trimethoxysilyl)propoxy]isosorbide in Synthesis Example 1.

### [Comparative Example 1]

A coating composition was prepared as in Example 1 except that the alkoxymethylsiloxane in Comparative Synthesis Example 1 was used instead of bis[(3-trimethoxysilyl)propoxy]isosorbide in Synthesis Example 1.

### [Comparative Example 2]

A coating composition was prepared as in Example 1 except that 2,2'-bis[4-[3-(trimethoxysilyl)propoxy]phenyl]propane in Comparative Synthesis Example 2 was used instead of bis[(3-trimethoxysilyl)propoxy]isosorbide in Synthesis Example 1.

### [Evaluation of coating film]

Each of the compositions of Examples and Comparative Examples was applied onto a quartz glass substrate of 1 mm thick by means of a bar coater and heat cured at 105°C for 0.5 hour into a cured film of 10 µm thick. Each cured film was evaluated for film properties as shown below. The results are shown in Table 1 and FIG. 1. Notably, the results of evaluation of a quartz glass substrate alone are also shown in Table 1 as Reference Example 1.

### [1] Appearance

On visual observation of film appearance, the film was judged for transparency according to the following criterion.
○: fully transparent
X: partially turbid

### [2] Hardness

The film was scratched on the surface with the nail to examine whether or not it was marred, and judged according to the following criterion.
○: intact
X: marred

### [3] Adhesion

Adhesion was analyzed according to JIS K5400, specifically by scribing a sample with a razor along 6 longitudinal and 6 transverse lines at a spacing of 2 mm to define 25 square sections, tightly attaching commercially available pressure-sensitive adhesive tape (Celophane by Nichiban Co., Ltd.) thereto, rapidly pulling back the adhesive tape at an angle of 90°, and counting the number (N) of film sections kept unpeeled. The result is expressed as N/25 and reported as (initial) adhesion.
○: 25
Δ: 10 ≤ N < 25
X: < 10

### [4] Optical properties

A coating film on quartz glass was measured for UV/visible light transmission spectrum by a spectrophotometer U-3310 (Hitachi, Ltd.) over a wavelength range of 200 to 500 nm. UV-A transmission was evaluated from a transmittance of light of wavelength 320 nm. Selective UV transmission was evaluated from a difference between transmittance at 400 nm and transmittance at 270 nm.

### [UV-A transmission]

⊚: 85% or higher
○: from 75% to less than 85%
Δ: from 65% to less than 75%
X: less than 65%

### [Selective UV transmission]

transmittance difference between 400 nm and 270 nm
⊚: no less than 90% points
○: less than 90% points and not less than 80% points
Δ: less than 80% points and not less than 70% points
X: less than 70% points

### [5] Overall evaluation

Pass: ○ or ⊚ for all items
Fail: one or more X marks

**[Table 1]**

| | | | Example 1 | Example 2 | Comparative Example 1 | Comparative Example 2 | Reference Example 1 |
|---|---|---|---|---|---|---|---|
| Appearance | | | ○ | ○ | ○ | ○ | - |
| Hardness | | | ○ | ○ | ○ | ○ | - |
| Adhesion | | | ○ | ○ | ○ | ○ | - |
| Transmittance (%) | UV-A | 400 nm | 98.6 | 99.2 | 99.7 | 77.4 | 99.3 |
| | | 350 nm | 94.8 | 96.4 | 99.2 | 62.9 | 98.6 |
| | | 340 nm | 93.2 | 94.4 | 99.5 | 60.9 | 98.4 |
| | | 330 nm | 90.5 | 89.1 | 99.9 | 55.0 | 98.3 |
| | | 320 nm | 85.2 | 76.0 | 99.3 | 36.8 | 97.9 |
| | UV-B | 310 nm | 74.8 | 49.7 | 98.0 | 22.5 | 97.8 |
| | | 300 nm | 57.1 | 14.8 | 95.0 | 11.3 | 97.5 |
| | | 290 nm | 35.8 | 3.2 | 90.2 | 0.0 | 97.1 |
| | UV-C | 280 nm | 18.5 | 0.6 | 82.6 | 0.0 | 96.7 |
| | | 270 nm | 8.4 | 0.2 | 71.6 | 0.0 | 96.3 |
| | | 260 nm | 3.6 | 0.1 | 55.4 | 0.0 | 95.9 |
| | | 250 nm | 1.4 | 0.1 | 34.5 | 0.0 | 95.3 |
| Difference between transmittance @ 400 nm and transmittance @ 270 nm | | | 90.2 | 99.0 | 28.1 | 77.4 | 3.0 |
| UV-A transmission | | | ⊚ | ○ | ⊚ | X | - |
| Selective UV transmission | | | ⊚ | ⊚ | X | Δ | - |
| Overall evaluation | | | Pass | Pass | Fail | Fail | - |

As seen from Table 1 and FIG. 1, cured films obtained from the coating compositions of Examples 1 and 2 are excellent in transparency in the visible light region and adhesion, and exhibit the selective UV transmission performance that meets both transmission of ultraviolet radiation in the UV-A region (wavelength 315 nm or longer) and blocking of ultraviolet radiation in the UV-C region (wavelength shorter than 280 nm).

By contrast, a cured film of Comparative Example 1 using conventional methyl-based siloxane transmits a broad spectrum of ultraviolet radiation from the UV-A region to the UV-C region. A cured film of Comparative Example 2 having a bisphenol A-based structure rather than isosorbide structure blocks not only ultraviolet radiation in the UV-C region, but also ultraviolet radiation in the UV-A region.

It is evident from the above results that from the coating compositions within the scope of the invention, hard films having the selective UV transmission performance that meets both transmission of ultraviolet radiation in the UV-A region and blocking of ultraviolet radiation in the UV-C region can be formed.

## Claims

1. A coating composition comprising
(A) an alkoxysilane containing a compound having the formula (I): 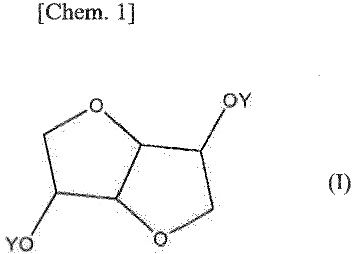 wherein Y which may be the same or different is each independently a group: -R¹-SiR²ₙ(OR³)₃₋ₙ wherein R¹ is an alkylene group of 1 to 6 carbon atoms, R² and R³ which may be the same or different are each independently an alkyl group of 1 to 5 carbon atoms, and n is an integer of 0 to 2, or a hydrolyzate or condensate thereof and
(B) a curing catalyst.

2. The coating composition of claim 1 wherein the curing catalyst is a titanium alkoxide compound.

3. The coating composition of claim 1 or 2 wherein the compound having formula (I) is the hydrosilylation reaction product of isosorbide diallyl ether or isosorbide divinyl ether with a hydrosilane.

4. A coated article comprising a substrate and a cured coating formed thereon by curing the coating composition of any one of claims 1 to 3.

5. A compound having the formula (I): 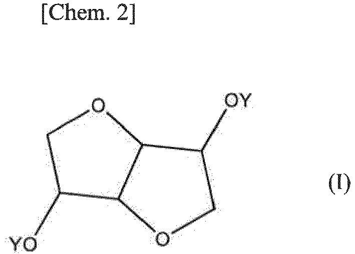 wherein Y which may be the same or different is each independently a group: -R¹-SiR²ₙ(OR³)₃₋ₙ wherein R¹ is an alkylene group of 1 to 6 carbon atoms, R² and R³ which may be the same or different are each independently an alkyl group of 1 to 5 carbon atoms, and n is an integer of 0 to 2.

6. The compound of claim 5 wherein R¹ is ethylene or trimethylene, and n is 0.
